# EUROPÄISCHE PATENTSCHRIFT

(11) **EP 0 958 131 B1**
(45) Veröffentlichungstag und Bekanntmachung des Hinweises auf die Patenterteilung: **18.10.2000**
(21) Anmeldenummer: 98903995.3
(22) Anmeldetag: 07.01.1998
(51) Int. Cl.: B29C 70/46, B29L 9/00

(54) **FORMTEIL UND VERFAHREN ZU SEINER HERSTELLUNG**
CAST PART, AND PRODUCTION OF SAME
PIECE MOULEE ET MODE DE FABRICATION

(30) Priorität: 06.02.1997 DE 19704383
(43) Veröffentlichungstag der Anmeldung: 24.11.1999
(73) Patentinhaber: Möller Plast GmbH, 33649 Bielefeld (DE)
(72) Erfinder: BECKMANN, Friedhelm, D-32120 Hiddenhausen (DE)
(74) Vertreter: Schirmer, Siegfried, Dipl.-Ing.
(86) Internationale Anmeldenummer: DE9800013
(87) Internationale Veröffentlichungsnummer: WO9834778

(56) Entgegenhaltungen:
- EP-A- 0 355 641
- EP-A- 0 393 476
- EP-A- 0 647 519
- EP-A- 0 730 947
- US-A- 3 507 730
- US-A- 4 378 265
- DATABASE WPI Week 9436 Derwent Publications Ltd., London, GB; AN 94-290405 XP002065014 & JP 06 218 747 A (TOYOTA JIDOSHA K.K.) , 9.August 1994

## Beschreibung

Die Erfindung betrifft ein Verfahren zur Herstellung von Formteilen, insbesondere für Kraftfahrzeuge, bestehend aus einer eine Tragschicht bildenden Naturfasermatte mit einer Dekorschicht an deren oberer und Funktionselementen an deren unterer Fläche, die in einem Formwerkzeug durch Hinterpressen miteinander verbunden und in die gewünschte Form gebracht werden sowie ein nach dem Verfahren hergestelltes Formteil.

Bei der Fertigung von Formteilen aus Naturfasern, wie beispielsweise Hanf, Jute, Flachs oder Sisal, werden Fasermatten verwendet, die mit thermoplastischem Kunststoff als Bindemittel durchsetzt sind oder an deren Fasern derartige Bindemittel haften. Auf der oberen, im wesentlichen sichtbaren Fläche des Formteils ist zur ästhetischen Gestaltung und zur Verbesserung der Haptik ein Dekormaterial, beispielsweise aus Leder, Kunstleder, einem textilen Gewebe o. ä., angebracht. Die Herstellung des Formteils erfolgt derart, daß die Naturfasermatte mit dem Dekormäterial in einem Formwerkzeug bei einer der Schmelztemperaturen des thermoplastischen Bindemittels entsprechenden Temperaturen miteinander verpreßt und geformt werden. Bei diesem Vorgang wird die Naturfasermatte soweit verdichtet, daß sie über die von dem Formteil verlangten mechanischen Eigenschaften verfügt. Darüber hinaus wird aber auch das mit der Fasermatte zu verbindende Dekormaterial soweit zusammengedrückt, daß dessen haptische und gestalterische Wirkung beeinträchtigt wird. Andererseits führt jedoch ein zu geringer Preßdruck zu einer ungenügenden Verdichtung der Naturfasermatte mit der Folge unzureichender Festigkeitseigensschaften.

Ein weiterer Nachteil der aus Naturfasern hergestellten Formteile besteht beispielsweise bei Innenverkleidungen von Kraftfahrzeugen darin, daß die Naturfasern Feuchtigkeit aufnehmen können und dadurch die Eigenschaften des Formteils negativ beeinflußt werden. Außerdem setzen die Naturfasern unangenehme und in vielen Fällen nicht akzeptable Gerüche frei.

Aus der EP 0 730 947 A2 ist bereits ein aus Faserverbundmatten hergestelltes Formteil der oben beschriebenen Art zur Verkleidung des Innenraums von Kraftfahrzeugen sowie ein Verfahren zu dessen Herstellung bekannt. Dieses Formteil verfügt an den sichtbaren Außenflächen über eine aus einem Dekormaterial bestehende Dekorschicht, während an der Rückseite durch Hinterspritzen oder Hinterpressen mit inselartigen Bereichen verbundene Funktionsteile, z. B. Befestigungselemente, oder Verstärkungsrippen angeformt sind. Auch diese Verkleidungsteile werden in einem einzigen Preßvorgang, und zwar mit den oben beschriebenen Nachteilen, hergestellt, und es besteht außerdem die Gefahr der Feuchtigkeitsaufnahme und der Geruchsbelästigung.

In der US 4 378 265 ist ein Verfahren beschrieben, wonach eine Fasermatte in einem ersten Verfahrensschritt verdichtet und geformt wird. Erst in einem späteren Verfahrensschritt wird mit einem einstellbaren Druck eine Dekorschicht auf das vorgeformte Teil aufgebracht. Auch bei diesem bekannten Verfahren sind keine Maßnahmen vorgesehen, um das herzustellende Formteil vor Feuchtigkeit zu schützen.

Der Erfindung liegt daher die Aufgabe zugrunde, ein im wesentlichen aus Naturfasern bestehendes Formteil bereitzustellen, das durch gute mechanische Eigenschaften, geringe Geruchsbelästigung und den Ausschuß der Feuchtigkeitsaufnahme sowie uneingeschränkte haptische und ästhetische Wirkung des Dekormaterials über einen hohen Gebrauchswert verfügt sowie ein Verfahren zu dessen Herstellung anzugeben.

Erfindungsgemäß wird die Aufgabe mit einem Verfahren gelöst, bei dem zunächst die mit einem Bintemittel versehene Naturfasermatte im Bereich der Bindemittel-Schmelztemperatur entsprechend der gewünschten Stärke und Festigkeitseigenschaften mittels Preßdruck verdichtet und die so gebildete Tragschicht des Formteils bei abgesenktem Druck in einem Formwerkzeug durch Hinterpressen auf der unteren Fläche mit einem eine Versiegelungsschicht bildenden schmelzflussigen Bindemittel und auf der oberen Fläche mit der Dekorschicht in der Weise durch Hinterpressen verbunden wird, daß die Tragschicht zwischen der Versiegelungsschicht und der Dekorschicht eingekammert wird.

Mit diesem Verfahren kann ein Formteil hergestellt werden, das gute Festigkeitseigenschaften aufweist und dessen Dekorschicht uber eine uneingeschrankte haptische und ästhetische Wirkung verfügt und durch die an der unteren Fläche einstückig angeformte Versiegelungsschicht eine Feuchtigkeitsaufnahme und Geruchsfreisetzung durch die Naturfasern verhindert.

Das erfindungsgemäße Verfahren ist weiter dadurch charakterisiert, daß die Naturfasermatte entweder zu einer ebenflächigen und im nachfolgenden Verfahrensschritt zu formenden oder sofort zu einer entsprechend der Kontur des Formteils geformten Tragschicht verdichtet wird.

Nach einem weiteren Merkmal der Erfindung werden beim Hinterpressen der Versiegelungsschicht gleichzeitig Verstärkungsrippen und Funktionselemente angeformt. Das Bindemittel für die Versiegelungsschicht und die angeformten Funktionselemente oder Rippen entspricht dem zur Bindung der Naturfasern verwendeten oder ist mit diesem kompatibel. Als Bindemittel wird thermoplastischer Kunststoff verwendet, der als schmelzflüssiger Massefilm durch Spritzgießen oder Strangablegen auf die untere Formwerkzeughälfte aufgebracht wird.

Weitere Merkmale und vorteilhafte Weiterbildungen des Verfahrens und des nach diesem hergestellten Formteils sind in den Unteransprüchen aufgeführt.

Ausführungsbeispiele der Erfindung werden anhand der beigefügten Zeichnung näher erläutert. Es zeigen:
- Fig. 1: eine Schnittdarstellung eines auf der Basis von Naturfasern hergestellten flächigen Formteils, das an seiner oberen Seite vollflächig mit einer Dekorschicht und an seiner Unterseite vollflächig mit einer Versiegelungsschicht mit angeformten Funktionselementen und Verstärkungsrippen versehen ist;
- Fig. 2: das flächige Formteil nach Fig. 1, jedoch mit einer nur einen Teilbereich abdeckenden Versiegelungsschicht;
- Fig. 3: eine Schnittdarstellung eines flächigen Formteils mit einer den Naturfaserbereich vollständig abdeckenden Dekorschicht und einer über diesen Bereich seitlich hinausgehenden Versiegelungsschicht und
- Fig. 4: eine Schnittdarstellung eines flächigen Formteils, bei dem nur gegenüberliegende Teilbereiche der aus einer Naturfasermatte bestehenden Tragschicht mit einer Versiegelungsschicht versehen sind.

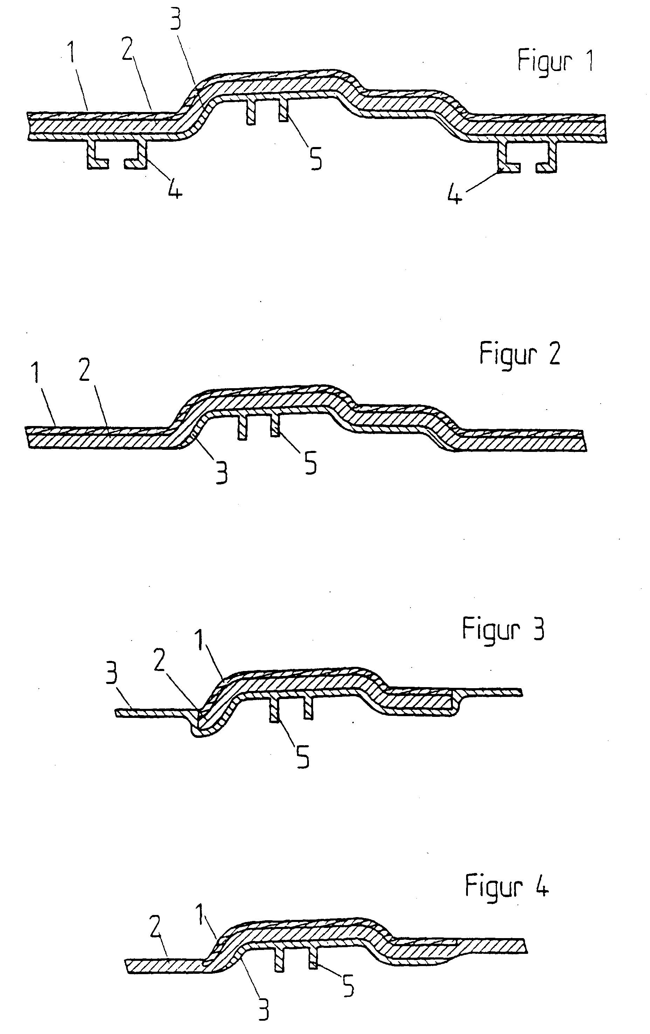

Die in den Figuren 1 bis 4 dargestellten Ausführungsformen eines flächigen Formteils, das beispielsweise bei Kraftfahrzeugen als Bauteil für die Innenverkleidung Verwendung finden kann, umfassen eine mit einem Bindemittel, vorzugsweise thermoplastischem Kunststoff, imprägnierte oder durchsetzte Tragschicht 2 aus Naturfasern wie Flachs, Jute, Hanf, Sisal und anderen oder aus einer Kombination derartiger Naturstoffe. Die obere - sichtbare - Seite des in einer bestimmten Kontur ausgebildeten flächigen Formteils ist zur Verbesserung der ästhetischen und haptischen Eigenschaften mit einer nicht lösbar befestigten Dekorschicht 1 abgedeckt, die aus Leder, textilem Gewebe oder einem ähnlichen geeigneten Dekormaterial bestehen kann. Die Dekorschicht 1 kann den tragenden Grundkörper des flächigen Formteils, nämlich die durch ein Bindemittel zusammengehaltene Tragschicht 2, nach Figur 1, 2 und 3 entweder vollständig abdecken oder, wie Figur 4 zeigt, nur in sichtbaren oder aus anderen Gründen einem dekorativen Zweck dienenden Teilbereichen der Oberfläche der Tragschicht 2 vorgesehen sein.

An der Unterseite des flächigen Formteils, z. B. der nicht sichtbaren Seite einer Türverkleidung, ist eine mit der Tragschicht 2 aus Naturfasern fest verbundene Versiegelungsschicht 3 vorgesehen, die aus dem gleichen oder einem verträglichen Material, wie das des Bindemittels für die Tragschicht 2, hier einem thermoplastischen Kunststoff, besteht. Die Versiegelungsschicht 3 kann die Tragschicht 2, wie die Figuren 1 und 3 zeigen, entweder vollständig abdecken oder auch nur, wie in den Figuren 2 und 4 dargestellt ist, Teilbereiche der Naturfasern nach außen abdecken. Figur 3 zeigt noch eine Besonderheit insofern, als die Tragschicht 2 zwischen der Dekorschicht 1 und der Versiegelungsschicht 3 eingekammert ist und die Versiegelungsschicht 3, beispielsweise zu Befestigungszwecken, über die Tragschicht 2 hinaus verlängert ist.

Während die Dekorschicht 1 zunächst nur der optischen und haptischen Gestaltung der sichtbaren Flächen des Formteils dient, kommt der Versiegelungsschicht 3 im wesentlichen die Aufgabe des Feuchtigkeitsschutzes, d. h. der Verhinderung des Eindringens von Wasser in die Naturfasern der Tragschicht 2, zu, und zwar insbesondere an feuchtigkeitsgefährdeten und zudem nicht zugänglichen Stellen, wie beispielsweise der Innenseite der Türverkleidung. Darüber hinaus wirkt die Versiegelungsschicht 3 aber als Geruchsversiegelung und dient gleichzeitig als Befestigungsplatte für die Anformung von Befestigungs- und Verstärkungsmitteln und anderen Funktionselementen. Selbstverständlich kann bei Verwendung eines geeigneten Materials auch die Dekorschicht 1 geruchsmindernd wirken und die Tragschicht 2 aus Naturfasern vor Feuchtigkeit schützen.

Die Herstellung der in den Figuren 1 bis 4 beispielhaft beschriebenen Formteile erfolgt in der Weise, daß zunächst eine aus Naturfasern gebildete und mit einem thermoplastischen Kunststoff gebundene Naturfasermatte auf eine der Schmelztemperatur des thermoplastischen Bindemittels entsprechende Temperatur erwärmt und anschließend zur Erzielung der gewünschten mechanischen Eigenschaften des Formteils zu einer ebenflächigen Platte zusammengepreßt wird. Es ist aber grundsätzlich auch möglich, die Naturfasermatte gleich entsprechend der endgültigen Fertigkontur des Formteils zu verpressen. In diesem Fall wird die so gebildete, vorgeformte Tragschicht 2 gleichzeitig beschnitten.

In einem weiteren Verfahrensschritt wird bei geöffnetem bzw. teilweise geöffnetem Formwerkzeug, dessen Innenkontur der des herzustellenden Formteils entspricht, auf die untere Formwerkzeughälfte durch Spritzgießen eine Schicht aus thermoplastischem Kunststoff - entsprechend dem zur Bindung der Naturfasern in der Tragschicht 2 verwendeten Bindemittel - aufgetragen und in die obere Werkzeughälfte das Material für die Bildung der Dekorschicht 1 eingelegt und fixiert. Das Einbringen des thermoplastischen Kunststoffs und des Dekormaterials in das Formwerkzeug erfolgt entsprechend der Größe des abzudeckenden Bereichs entweder über die gesamte Konturfläche der oberen und unteren Formwerkzeughälfte oder nur in bestimmten zu beschichtenden Teilbereichen. Zur Herstellung des in Figur 3 gezeigten Formteils nehmen die zusammengepreßte Tragschicht 2 und das Dekormaterial nur einen begrenzten Abschnitt des Formwerkzeugs in Anspruch, während der thermoplastische Kunststoff für die Versiegelungsschicht 3 die Kontur der unteren Formwerkzeughälfte vollständig bedeckt, so daß die Naturfasern eingekammert sind und sich andererseits die Versiegelungsschicht 3 über die Seitenränder der Tragschicht 2 und der Dekorschicht 1 hinaus erstreckt.

In dem folgenden Verfahrensschritt wird die bereits verpreßte und ausreichende Festigkeitseigenschaften aufweisende Tragschicht 2 in das Formwerkzeug eingelegt, und in noch schmelzflüssigem Zustand des thermoplastischen Materials erfolgt bei einem Preßdruck, der geringer ist als der zum Verpressen der Naturfasermatte aufgewendete Druck, die Formgebung des Formteils und gleichzeitig die feste Verbindung des Dekormaterials und des Versiegelungsmaterials mit der verpreßten Naturfasermatte. Während des zweiten Formgebungsschritts im Formwerkzeug können außerdem gleichzeitig Funktionselemente, nämlich Befestigungsclipse 4 oder Verstärkungsrippen 5, an die Versiegelungsschicht 3, die in diesem Fall auch als Halteplatte dient, angeformt werden.

Durch den bei diesem Verfahrensschritt auf das Dekormaterial ausgeübten geringen Druck wird eine Verschlechterung der ästhetischen und haptischen Eigenschaften der Dekorschicht 1 verhindert. Dennoch können durch das separate Verdichten der Naturfasermatte ausreichend hohe Festigkeitseigenschaften des Formteils erzielt werden. Die Versiegelungsschicht 3, die mit der Verhinderung der Feuchtigkeitsaufnahme, der Geruchsversiegelung und als Grundplatte für die Halterung der Funktionselemente 4,5 drei Funktionen erfüllt, kann eingefärbt oder mit einer Oberflächenstruktur versehen werden, um an der ggf. sichtbaren Unterseite des Formteils ein optisch gefälliges Aussehen zu bewirken.

## Patentansprüche

1. Verfahren zur Herstellung von Formteilen, insbesondere für Kraftfahrzeuge, bestehend aus einer eine Tragschicht bildenden Naturfasermatte mit einer Dekorschicht an deren oberer und Funktionselemente an deren unterer Fläche, die in einem Formwerkzeug durch Hinterpressen miteinander verbunden und in die gewünschte Form gebracht werden, wobei zunachst die mit einem Bindemittel versehene Naturfasermatte im Bereich der Bindemittel-Schmelztemperatur entsprechend der gewünschten Stärke und Festigkeitseigenschaften mittels Preßdruck verdichtet wird und die so gebildete Tragschicht für das Formteil in einem Formwerkzeug bei abgesenktem Druck auf der unteren Fläche mit einem eine Versiegelungsschicht bildenden schmelzflüssigen Bindemittel und auf der oberen Fläche mit der Dekorschicht in der Weise durch Hinterpressen verbunden wird, daß die Tragschicht (2) zwischen der Versiegelungsschicht (3) und der Dekorschicht (1) eingekammert wird.

2. Verfahren nach Anspruch 1, dadurch gekennzeichnet, daß die Naturfasermatte zu einer ebenflächigen Tragschicht verpreßt wird und die Ausbildung der Konturen gemeinsam mit der Anformung der Dekorschicht und der Versiegelungsschicht durchgeführt wird.

3. Verfahren nach Anspruch 1, dadurch gekennzeichnet, das die Naturfasermatte zu einer Tragschicht in der Kontur des fertigen Formteils verpreßt wird und beschnitten wird und anschließend in einem separaten Verfahrensschritt die Dekorschicht und die Versiegelungsschicht angeformt werden.

4. Verfahren nach einem der Ansprüche 1 bis 3, dadurch gekennzeichnet, daß beim Anformen der Versiegelungsschicht aus dieser die Funktionselemente und/oder Verstärkungsrippen ausgeformt werden.

5. Verfahren nach einem der Ansprüche 1 bis 4, dadurch gekennzeichnet, daß zum Anformen der Versiegelungsschicht bei geöffnetem Formwerkzeug auf die untere Formwerkzeughälfte ein Massefilm aus einem dem Bindemittel für die Tragschicht entsprechenden oder mit diesem kompatiblen thermoplastischen Material aufgetragen und zum Anformen der Dekorschicht in die obere Formwerkzeughälfte ein Dekormaterial eingelegt wird.

6. Verfahren nach Anspruch 5, dadurch gekennzeichnet, daß der Massefilm für die Versiegelungsschicht durch Spritzgießen oder Strangablegen auf die untere Formwerkzeughälfte aufgetragen wird.

7. Formteil, hergestellt gemäß dem Verfahren nach einem der Ansprüche 1 bis 6, bestehend aus eine Tragschicht bildenden, verdichteten und mit einem Bindemittel gebundenen Naturfasern und einer mit der oberen Fläche der Tragschicht verbundenen Dekorschicht sowie an der Unterseite der Tragschicht angebrachten Funktionselementen, vorzugsweise für Kraftfahrzeuge, dadurch gekennzeichnet, daß an der unteren Seite der Tragschicht (2) zum Feuchtigkeitsschutz und zur Geruchsminderung sowie zur Halterung der Funktionselemente (4, 5) eine Versiegelungsschicht (3) vorgesehen ist und daß die Tragschicht (2) zwischen der Versiegelungsschicht (3) und der Dekorschicht (1) eingekammert ist.

8. Formteil nach Anspruch 7, dadurch gekennzeichnet, daß die Versiegelungsschicht (3) einstückig mit der Tragschicht (2) sowie den Funktionselementen (4, 5) verbunden ist.

9. Formteil nach Anspruch 7, dadurch gekennzeichnet, daß die Versiegelungsschicht (3) über die Seitenränder der Tragschicht (2) hinaus verlängert ist.

10. Formteil nach einem der Ansprüche 7 bis 9, dadurch gekennzeichnet, daß die Funktionselemente durch Befestigungsclipse (4) und Verstärkungsrippen (5) gebildet sind.

## Claims

1. Method for production of moulded parts, especially for motor vehicles, consisting of a natural fibre mat, which forms a support layer, with a decorative layer at the upper surface thereof and functional elements at the lower surface thereof, which are connected together in a moulding tool by rearward pressing and brought into the desired shape, wherein initially the natural fibre mat, which is provided with a binder, is compressed by means of a pressing pressure in the region of the binder melt temperature in correspondence with the desired thickness and strength properties and the thus formed support layer for the moulded part is connected in a moulding tool, under reduced pressure, on the lower surface with a molten binder which forms a sealing layer and on the upper surface with the decorative layer in such a manner by rearward pressing that the support layer (2) is clamped-in between the sealing layer (3) and the decorative layer (1).

2. Method according to claim 1, characterised in that the natural fibre mat is pressed into a planar support layer and the formation of the contours is carried in common with the shaping of the decorative layer and the sealing layer.

3. Method according to claim 1, characterised in that the natural fibre mat is pressed into a support layer in the shape of the finished moulded part and is cut and subsequently the decorative layer and the sealing layer are shaped in a separate method step.

4. Method according to one of claims 1 to 3, characterised in that during shaping of the sealing layer the functional elements and/or reinforcing ribs are formed from this.

5. Method according to one of claims 1 to 4, characterised in that for forming the sealing layer a mass film consisting of a thermoplastic material corresponding with the binder for the support layer or compatible therewith is applied to the lower mould tool half when the mould tool is opened and for forming the decorative layer a decorative material is laid into the upper mould tool half.

6. Method according to claim 5, characterised in that the mass film for the sealing layer is applied to the lower mould tool half by injection moulding or depositing of strip.

7. Moulded part produced in accordance with the method according to one of claims 1 to 6, consisting of natural fibres, which form a support layer, are compressed and bound by a binder, and a decorative layer connected with the upper surface of the support layer as well as functional elements applied to the underside of the support layer, preferably for motor vehicles, characterised in that a sealing layer (3) is provided at the underside of the support layer (2) for moisture protection and for reduction in odour as well as for retaining the functional elements (4, 5) and that the support layer (2) is clamped-in between the sealing layer (3) and the decorative layer (1).

8. Moulded part according to claim 7, characterised in that the sealing layer (3) is integrally connected with the support layer (2) as well as the functional elements (4, 5).

9. Moulded part according to claim 7, characterised in that the sealing layer (3) is prolonged beyond the lateral edges of the support layer (2).

10. Moulded part according to one of claims 7 to 9, characterised in that the functional elements are formed by fastening dips (4) and reinforcing ribs (5).

## Revendications

1. Procédé de fabrication de pièces moulées notamment destinées à des véhicules automobiles, ces pièces se composant d'une nappe de fibres naturelles formant une couche de support, avec une couche de décoration sur sa surface supérieure et des éléments fonctionnels sur sa surface inférieure, qui sont reliés les uns aux autres dans l'outil de moulage par compression et sont mis à la forme souhaitée,
caractérisé en ce qu'
on comprime tout d'abord la nappe de fibres naturelles ayant reçu un liant, à un niveau de température de fusion du liant selon l'épaisseur souhaitée et les propriétés de résistance en appliquant une pression de compression, et la couche de support ainsi formée pour la pièce moulée est alors reliée dans un outil de moulage, sous pression réduite, sa surface inférieure reçoit un liant liquide fondu constituant une couche d'étanchéité et la surface supérieure reçoit une couche de décoration, en procédant par compression arrière pour que la couche de support (2) soit pincée entre la couche d'étanchéité (3) et la couche de décoration (1).

2. Procédé selon la revendication 1,
caractérisé en ce que
la nappe de fibres naturelles est comprimée pour former une couche de support plate et la réalisation des contours se fait en même temps que l'on forme la couche décorative et la couche d'étanchéité.

3. Procédé selon la revendication 1,
caractérisé en ce qu'
on presse et on revêt la nappe de fibres naturelles pour former une couche de support comme pièce moulée au contour définitif, puis dans une étape de procédé distincte, on forme la couche décorative et la couche d'étanchéité.

4. Procédé selon l'une quelconque des revendications 1 à 3,
caractérisé en ce que
lorsqu'on forme la couche d'étanchéité, on moule dans celle-ci les éléments fonctionnels et/ou les nervures de renforcement.

5. Procédé selon l'une quelconque des revendications 1 à 4,
caractérisé en ce que
pour former la couche d'étanchéité, lorsque le moule est ouvert, on applique sur la moitié inférieure du moule, un film de masse composé d'un liant en une matière thermoplastique correspondant à celle de la couche de support ou compatible avec celle-ci et pour former la couche décorative, on place une matière décorative dans la moitié supérieure du moule.

6. Procédé selon la revendication 5,
caractérisé en ce que
le film de masse de la couche d'étanchéité est appliqué par injection ou par dépôt en continu sur la moitié inférieure du moule.

7. Pièce moulée et fabriquée selon le procédé de l'une quelconque des revendications 1 à 6 composée de fibres naturelles comprimées et liées par un liant pour former une couche de support, ainsi que d'une couche de décoration reliée à la surface supérieure de la couche de support et d'éléments fonctionnels prévus sur la face inférieure de la couche de support, de préférence pour des véhicules automobiles,
caractérisée en ce que
- la face inférieure de la couche de support (2) comporte pour la protection contre l'humidité et réduire l'émission de bruit ainsi que pour tenir les éléments fonctionnels (4, 5), une couche d'étanchéité (3) et,
- la couche de support (2) est prise entre la couche d'étanchéité (3) et la couche décorative (1).

8. Pièce moulée selon la revendication 7,
caractérisée en ce que
la couche d'étanchéité (3) fait corps avec la couche de support (2) et avec les éléments fonctionnels (4, 5).

9. Pièce moulée selon la revendication 7,
caractérisée en ce que
la couche d'étanchéité (3) est prolongée au-delà des bords latéraux de la couche de support (2).

10. Pièce moulée selon l'une quelconque des revendications 7 à 9,
caractérisée en ce que
les éléments fonctionnels sont des pinces de fixation (4) et des nervures de renforcement (5).
